# EUROPÄISCHE PATENTSCHRIFT

(11) **EP 1 234 737 B1**
(45) Veröffentlichungstag und Bekanntmachung des Hinweises auf die Patenterteilung: **25.01.2006**
(21) Anmeldenummer: 01127512.0
(22) Anmeldetag: 17.11.2001
(51) Int. Cl.: B60S 1/34, B60S 1/32

(54) **Wischvorrichtung, insbesondere für ein Kraftfahrzeug**
Wiper device, in particular for a vehicle
Dispositif d'essuie-glace, en particulier pour un véhicule

(30) Priorität: 21.02.2001 DE 10108183
(43) Veröffentlichungstag der Anmeldung: 28.08.2002
(73) Patentinhaber: ROBERT BOSCH GMBH, 70442 Stuttgart (DE)
(72) Erfinder: Zimmer, Joachim, 77880 Sasbach (DE); Rapp, Harald, 77815 Buehl (DE)

(56) Entgegenhaltungen:
- EP-A- 0 579 550
- WO-A-99/08911
- GB-A- 2 311 461
- US-A- 2 860 365

## Beschreibung

### Stand der Technik

Die Erfindung betrifft eine Wischvorrichtung, insbesondere für ein Kraftfahrzeug, nach Gattung des unabhängigen Anspruchs. Es sind schon zahlreiche Wischvorrichtungen, beispielsweise aus der EP-A-0 579 550 bekannt, bei denen die Auflagekraft mit der das Wischblatt auf die Scheibe des Kraftfahrzeugs gedrückt wird, durch eine am Wischerarm befestigte Feder bewirkt wird.

Eine weitere Wischvorrichtung ist aus dem Dokument GB-A-2 311 461 bekannt, bei der das Zugmittel außerhalb des Wischarmes liegt.

Der Wischerarm weist dazu ein im wesentlichen längliches Gelenkteil auf, an das an einem Ende das Wischblatt anlenkbar ist. Am anderen Ende ist das Gelenkteil mit einem Befestigungsteil gelenkig verbunden, das drehfest an der Wischerwelle der Wischvorrichtung befestigt wird.

Zur Erzeugung der Auflagekraft ist auf der der Scheibe zugewandten Seite der gelenkigen Verbindung eine Zugfeder zwischen Gelenkteil und Befestigungsteil gespannt. Dazu weist das Befestigungsteil einen Bolzen auf, in den eine Seite eines C-förmigen Bügels eingehakt ist. An der anderen Seite des Bügels ist ein Ende der Zugfeder eingehakt. Das Gelenkteil weist ebenfalls einen Bolzen oder eine Lasche zur Befestigung der Zugfeder auf.

Da die Zugfeder jedoch teilweise über die Unterkante des Gelenkteils hinausragt, ergibt sich ein ungünstiger Strömungsverlauf bei hohen Fahrgeschwindigkeiten. Außerdem ist die Zugfeder sämtlichen Witterungseinflüssen ausgesetzt, wodurch ihre Lebensdauer verkürzt wird.

### Vorteile der Erfindung

Die erfindungsgemäße Wischvorrichtung mit den Merkmalen des Hauptanspruchs hat den Vorteil, daß durch einen kleinen Winkel, zwischen Lateralflanke des Wischerarms und der Befestigungslasche der Feder, die Feder vollständig im Inneren des Profils angeordnet werden kann. Dadurch bleibt das Zugmittel vor Witterungseinflüssen verschont und stellt darüber hinaus keinen den Strömungsverlauf störenden Fremdkörper dar.

Erfindungsgemäß ist die Lasche einstückig mit dem Gelenkteil ausgebildet So kann die Lasche und das Gelenkteil als ein einziges Teil in Stanz-Biege-Technik hergestellt werden.

Des weiteren ist die Lasche erfindungsgemäß so ausgebildet, daß zwei Bereiche entstehen und der erste Bereich mit der Lateralflanke einen Winkel kleiner 45 Grad, insbesondere zwischen 20 und 40 Grad, vorzugsweise kleiner als 30 Grad, einschließt und ist darüber hinaus der zweite Bereich derart geformt, daß er eine etwa senkrecht zur Lateralflanke und/oder parallel zur Basis verlaufende Ebene aufweist, so kann das Zugmittel ohne Torsionsbelastung am zweiten Bereich der Lasche befestigt werden.

Greift das Zugmittel am zweiten Bereich der Lasche an, so kann es ohne eine Torsionsbelastung auch dann mit der Lasche verbunden werden, wenn das andere Ende des Zugmittels senkrecht oder parallel zur Lateralflanke am Befestigungsteil befestigt ist.

Durch die in den Unteransprüchen aufgeführten Maßnahmen ergeben sich vorteilhafte Weiterbildungen und Verbesserungen der im Hauptanspruch angegebenen Merkmale.

Ist das Gelenkteil als Biege-Stanz-Teil ausgebildet und weist im Querschnitt ein im wesentlichen U-förmiges Profil auf, so kann das Zugmittel innerhalb des U-förmigen Profiles vollständig verdeckt angeordnet werden.

Besonders vorteilhaft ist, wenn das Zugmittel als Zugfeder ausgebildet ist, da Zugfedern als kostengünstige Massenware in entsprechender Qualität zur Verfügung stehen.

Insbesondere ist es vorteilhaft, wenn die Zugfeder in Bezug auf Torsionsbeanspruchung entspannt an die Lasche angelenkt ist. Dies erhöht die Lebensdauer sowie die Langzeitstabilität der Zugfeder beträchtlich.

Weist die Lasche ein Loch auf, in das die Zugfeder eingehängt ist, so kann die Zugfeder einfach, schnell und zuverlässig in der Serienfertigung mit dem Gelenkteil verbunden werden. Außerdem kann die Form und/oder die Anordnung des Lochs in Abhängigkeit der Länge der Feder oder der Federkonstanten individuell variiert werden.

Weist die Lasche eine Kerbe auf, in die die Zugfeder eingehängt ist, so wird keine Bohrung oder Ausstanzung benötigt. Dadurch werden Kosten vermieden und Material eingespart.

Besonders vorteilhaft ist es, wenn das Zugmittel im Bereich der Lasche nicht über eine, von der der Basis abgewandten Kante der Lateralflanke, sich parallel zur Basis erstreckende Ebene des Profils herausragt, da so gewährleistet ist, daß sich keine unvorteilhaften Strömungsverläufe im Bereich der Lasche bilden und weiterhin das Zugmittel von Witterungseinflüssen ferngehalten wird.

### Zeichnung

Ein Ausführungsbeispiel der Erfindung ist in den Zeichnungen dargestellt und in der nachfolgenden Beschreibung näher erläutert. Es zeigen:
Figur 1 einen Wischerarm einer erfindungsgemäßen Wischvorrichtung,
Figur 1a schematisch eine Wischvorrichtung,
Figur 2 einen perspektivischen Querschnitt durch ein Gelenkteil,
Figur 3 das Ende eines Gelenkteils einer erfindungsgemäßen Wischvorrichtung in perspektivischer Darstellung und
Figur 4 einen perspektivischen Querschnitt durch ein Gelenkteil einer erfindungsgemäßen Wischvorrichtung.

### Beschreibung der Ausführungsbeispiele

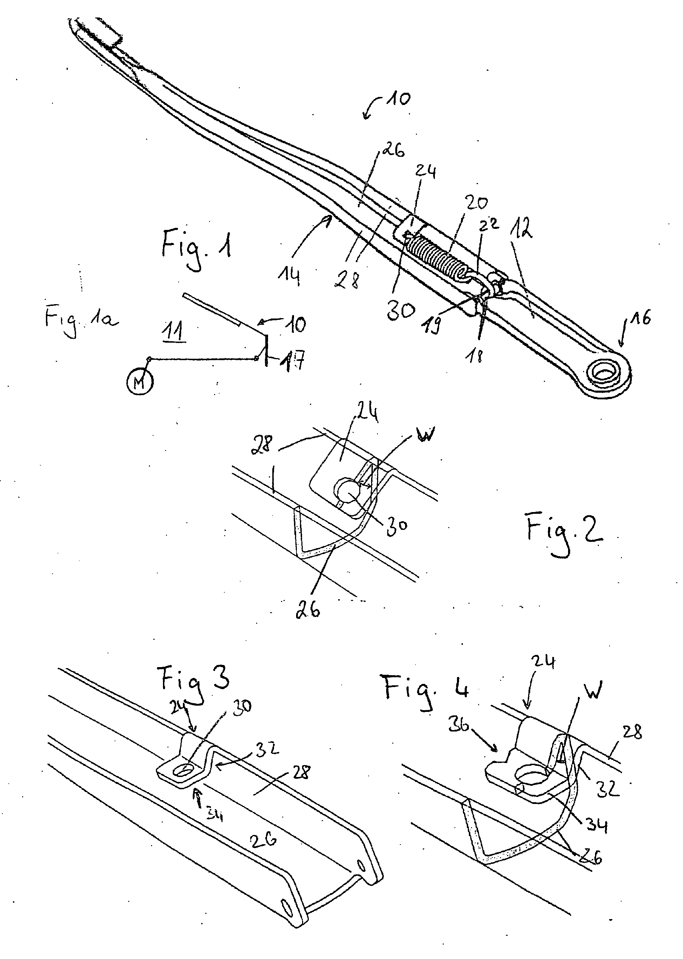

Figur 1 zeigt einen Wischerarm 10 einer erfindungsgemäßen Wischvorrichtung 11 (Fig. 1a) in einer perspektivischen Darstellung. Der Wischerarm 10 besteht im wesentlichen aus einem Befestigungsteil 12 und einem Gelenkteil 14 und ist von im wesentlichen länglicher Gestalt..Das Befestigungsteil 12 weist an einem Ende seiner Längserstreckung ein Auge 16 auf, mit dem es an der Wischerwelle 17 der Wischvorrichtung 11 drehfest verbindbar ist.

Weiterhin weist das Befestigungsteil 12 an seinem, dem Auge 14 abgewandten Ende ein im wesentlichen U-förmiges Profil auf. An diesem Ende ist das Befestigungsteil 12 mit dem Gelenkteil 16 beweglich verbunden. Dieses weist in diesem Bereich ebenfalls ein im wesentlichen U-förmiges Profil auf. Die bewegliche Verbindung zwischen dem Befestigungsteil 12 und dem Gelenkteil 16 wird über einen Bolzen 18 erzielt, der eine Drehbewegung um eine konzentrisch zum Bolzen 18 liegende Achse zuläßt.

Zur Erzeugung eines Drehmomentes bzw. einer Kraft, an dem Ende des Gelenkteils 14, das dem Befestigungsteil 12 abgewandt ist, ist das Gelenkteil 16 zusätzlich mit einem Zugmittel 20, das als Zugfeder ausgebildet ist, mit dem Befestigungsteil 12 verbunden. Das Zugmittel 20 ist dazu an einem Ende über einen C-förmigen Bügel 22 mit einem weiteren Bolzen 19 verbunden und am anderen Ende am Gelenkteil 16 eingehängt. Der weitere Bolzen 19 erstreckt sich im Bereich des Bolzens 18 parallel zu diesem auf der der Scheibe zugewandten Seite des Befestigungsteils 12 und führt, wie dieser, quer durch das Befestigungsteil 12. In der Figur 1 verdeckt der weitere Bolzen 19 den Bolzen 18.

Das Gelenkteil 16 weist ein im wesentlichen U-förmiges Profil auf, welches aus einer Basis 26 und zwei zur Basis 26 etwa senkrecht angeordneten Lateralflanken 28 besteht. Eine der Lateralflanken 28 weist an ihrer der Basis 26 abgewandten Kante eine Lasche 24 auf, in die ein Loch 30 gestanzt ist. In dieses Loch ist das Zugmittel 20 eingehängt.

In Figur 2 ist der Bereich der Lasche 24 in einer perspektivischen Schnittdarstellung gezeigt. Die Lasche 24 ist dabei einstückig aus der Lateralflanke 28 gebogen und erstreckt sich von der der Basis abgewandten Kante des Lateralflügels 28 in Richtung der Basis 26. Der Winkel w, den die Lateralflanke 28 mit der durch die Lasche 24 definierten Ebene einschließt, ist erfindungsgemäß kleiner als 45 Grad. Insbesondere soll dieser Winkel w zwischen 20 und 40 Grad, vorzugsweise kleiner als 30 Grad sein, damit sich das Zugmittel 20 vollständig innerhalb des U-förmigen Profils befindet, d.h. sich vollständig zwischen Basis und den basisabgewandten Kanten der Lateralflanken 28 versteckt.

In Figur 3 ist eine Variation der in Figur 2 dargestellten Ausbildung gezeigt. Bei dieser Variation kann die Lasche 24 im wesentlichen in zwei Bereiche aufgeteilt werden. Einen ersten Bereich 32, der mit der Lateralflanke 28 einen Winkel von etwa 25 Grad einschließt und einen zweiten Bereich 34, der so abgebogen ist, daß er etwa senkrecht zur Lateralflanke 28 bzw. ungefähr parallel zur Basis 26 verläuft. In diesem zweiten Bereich 34 ist auch das Loch 30 angeordnet, in das die Zugfeder 20 eingehängt wird. Allgemeiner ausgedrückt soll der Bereich der Lasche 24, also der Befestigungsbereich in dem das Zugmittel 20 im Gelenkteil 14 befestigt ist, mit der Lateralflanke 28 genau den Winkel einschließen, der benötigt wird um das Zugmittel 20 torsionsspannungsfrei aufzuhängen. Da bei handelsüblichen Zugfedern die Befestigungshaken an den Enden häufig parallel oder senkrecht zueinander ausgebildet sind, soll der Befestigungsbereich der Lasche 24 senkrecht oder parallel zur Lateralflanke 28 ausgebildet sein, weil der weitere Bolzen 19 im Regelfall ebenfalls etwa senkrecht zur Lateralflanke 28 angeordnet ist.

Natürlich ist es ohne weiteres möglich auch drei, vier oder mehr Bereiche der Lasche 24 vorzusehen. Insbesondere bei schmalen Gelenkteilen 14 bietet es sich an die Lasche 24 nicht einem Schritt, sondern zwei Schritten abzubiegen. Dann schließt natürlich erst der mittlere Bereich der Lasche 24 mit der Lateralflanke 28 den Winkel w ein.

In Figur 4 ist diese Variation in einer perspektivischen Schnittdarstellung nochmals dargestellt. Die Lasche 24 mit dem ersten Bereich 32 und dem zweiten Bereich 34 ist einstückig mit der Lateralflanke 28 ausgebildet. Der erste Bereich 32 der Lasche 24 und die Lateralflanke 28 schließen einen Winkel w ein, der etwa 25 Grad beträgt. Die vom zweiten Bereich 34 gebildete Ebene ist etwa parallel zur Basis 26 angeordnet.

Das ganze Gelenkteil 16 ist einschließlich der Lasche 24 mit dem ersten Bereich 32 und dem zweiten Bereich 34 in Stanz-Biege-Technik hergestellt.

Eine weitere Möglichkeit ist es, die Lasche 24 so zu gestalten, daß sie brückenartig die beiden Lateralflanken 28 des Gelenkteils 14 verbindet. Dadurch kann im inneren des U-förmigen Profils des Gelenkteils 14 ein Spritzwasserschlauch der Wisch-Wasch-Funktion geführt werden. In einer Variation kann die Lasche 24 auch so gewählt werden, daß der elastische Schlauch zwischen der Lasche 24 und der der Lasche 24 abgewandten Lateralflanke 28 durchgedrückt werden kann, sich aber anschließend nicht selbst aus dem Inneren des Profils entfernen kann. Oder anders formuliert, daß der Abstand zwischen Lasche 24 und der der Lasche 24 abgewandten Lateralflanke 28 kleiner als der Schlauchdurchmesser ist.

## Patentansprüche

1. Wischvorrichtung, insbesondere für ein Kraftfahrzeug, mit einem Wischerarm, der zumindest ein Befestigungsteil (12) und ein, daran angelenktes Gelenkteil (14) aufweist, das mittels eines Zugmittels (20) mit dem Befestigungsteil (12) verbunden ist und im wesentlichen aus einem Profil mit einer Basis (26) und mindestens einer Lateralflanke (28) besteht und das Zugmittel (20) an einer sich von der Lateralflanke (28) aus erstreckenden Lasche (24) angelenkt ist, die von der, der Basis (26) abgewandten Kante der Lateralflanke (28) ausgehend, zur Basis (26) hin verläuft und mit der Lateralflanke (28) einen Winkel (W) einschließt, wobei der von der Lateralflanke (28) und zumindest einem Bereich der Lasche (24) eingeschlossene Winkel (w) kleiner als 45°, insbesondere zwischen 20° und 40°, vorzugsweise kleiner als 30° ist, wobei die Lasche (24) einstückig mit dem Gelenkteil (14) ausgebildet ist und einen ersten Bereich (32) und einen zweiten Bereich (34) aufweist und der erste Bereich (32) mit der Lateralflanke (28) einen Winkel (w) kleiner 45° aufweist und der zweite Bereich (34) eine etwa senkrecht zur Lateralflanke (28) und/oder etwa parallel zur Basis (26) angeordnete Ebene aufweist und das Zugmittel (20) unmittelbar am zweiten Bereich (34) der Lasche (24) angreift.

2. Wischvorrichtung nach einem der vorhergehenden Ansprüche, **dadurch gekennzeichnet, daß** das Gelenkteil (14) als Biege-Stanz-Teil ausgebildet ist und in einem Querschnitt ein im wesentlichen U-förmiges Profil aufweist.

3. Wischvorrichtung nach einem der vorhergehenden Ansprüche, **dadurch gekennzeichnet, daß** das Zugmittel (20) als Zugfeder ausgebildet ist.

4. Wischvorrichtung nach einem der vorhergehenden Ansprüche, **dadurch gekennzeichnet, daß** die Zugfeder (20) in bezug auf Torsionsbeanspruchung entspannt an die Lasche (24) angelenkt ist.

5. Wischvorrichtung nach einem der vorhergehenden Ansprüche, **dadurch gekennzeichnet, daß** die Lasche (24) ein Loch (30) aufweist, in das die Zugfeder (20) eingehängt ist.

6. Wischvorrichtung nach einem der Ansprüche 1 bis 4, **dadurch gekennzeichnet, daß** die Lasche (24) eine Kerbe aufweist, in welche die Zugfeder (20) eingehängt ist.

7. Wischvorrichtung nach einem der vorhergehenden Ansprüche, **dadurch gekennzeichnet, daß** das Zugmittel (20) im Bereich der Lasche (24) nicht über eine, von der der Basis (26) abgewandten Kante der Lateralflanke (28) sich parallel zur Basis (26) erstreckende Ebene des Profils hinausragt.

## Claims

1. Wiper device, in particular for a vehicle, having a wiper arm which has at least one fastening part (12) and an articulated part (14), which is coupled thereto, is connected to the fastening part (12) by means of a tensioning means (20) and essentially comprises a profile with a base (26) and at least one lateral flank (28), and the tensioning means (20) is coupled to a tab (24) which extends from the lateral flank (28), runs towards the base (26), starting from that edge of the lateral flank (28) which faces away from the base (26), and encloses an angle (W) with the lateral flank (28), the angle (w) enclosed by the lateral flank (28) and at least one region of the tab (24) being smaller than 45°, in particular between 20° and 40°, preferably smaller than 30°, the tab (24) being formed integrally with the articulated part (14) and having a first region (32) and a second region (34), and the first region (32) having an angle (w) of less than 45° with the lateral flank (28), and the second region (34) having a plane arranged approximately perpendicularly with respect to the lateral flank (28) and/or approximately parallel to the base (26), and the tensioning means (20) acting directly on the second region (34) of the tab (24).

2. Wiper device according to Claim 1, **characterized in that** the articulated part (14) is designed as a bent and punched part and has an essentially U-shaped profile in a cross section.

3. Wiper device according to one of the preceding claims, **characterized in that** the tensioning means (20) is designed as a tension spring.

4. Wiper device according to one of the preceding claims, **characterized in that** the tension spring (20) is coupled to the tab (24) in a manner such that it is relaxed with respect to torsional stress.

5. Wiper device according to one of the preceding claims, **characterized in that** the tab (24) has a hole (30) into which the tension spring (20) is fitted.

6. Wiper device according to one of Claims 1 to 4, **characterized in that** the tab (24) has a notch into which the tension spring (20) is fitted.

7. Wiper device according to one of the preceding claims, **characterized in that** the tensioning means (20) in the region of the tab (24) does not protrude over a plane of the profile extending parallel to the base (26) from that edge of the lateral flank (28) which faces away from the base (26).

## Revendications

1. Dispositif notamment pour un véhicule automobile comportant un bras d'essuyage ayant au moins une pièce de fixation (12) et une pièce d'articulation (14) articulée à la pièce de fixation, cette pièce articulée étant reliée à la pièce de fication (12) par au moins un moyen de traction (20) et elle se compose principalement d'un profilé ayant une base (26) et au moins un flanc latéral (28), et le moyen de traction (20) est articulé à une patte (24) partant du flanc latéral (28), cette patte, partant de l'arête du flanc latéral (28) à l'opposé de celle de la base (26) est dirigée vers la base (26) et forme avec le flanc latéral (28) un angle (W),
- l'angle (W) compris entre le flanc latéral (28) et au moins une zone de la patte (24) étant inférieur à 45° et notamment compris entre 20° et 40° et de préférence inférieur à 30°,
- la patte (24) étant réalisée en une seule partie avec la pièce articulée (14), et comportant une première zone (32) et une seconde zone (34),
- la première zone (32) formant avec le flanc latéral (28) un angle (W) inférieur à 45° et la seconde zone (34) présentant un plan sensiblement perpendiculaire au flanc latéral (28) et/ou sensiblement parallèle à la base (26), et le moyen de traction (20) attaque directement la seconde zone (34) de la patte (24).

2. Dispositif d'essuyage selon la revendication 1,
**caractérisé en ce que**
la pièce articulée (14) est une pièce matricée et cintrée et sa section correspond à celle d'un profil essentiellement en forme de U.

3. Dispositif d'essuyage selon l'une quelconque des revendications précédentes,
**caractérisé en ce que**
le moyen de traction (20) est un ressort de traction.

4. Dispositif d'essuyage selon l'une quelconque des revendications précédentes,
**caractérisé en ce que**
le ressort de traction (20) est articulé à la patte (24) de manière détendue en tension de torsion.

5. Dispositif d'essuyage selon l'une quelconque des revendications précédentes,
**caractérisé en ce que**
la patte (24) comporte un trou (30) dans lequel est accroché le ressort de traction (20).

6. Dispositif d'essuyage selon l'une quelconque des revendications 1 à 4,
**caractérisé en ce que**
la patte (24) comporte une encoche dans laquelle est accroché le ressort de traction (20).

7. Dispositif d'essuyage selon l'une quelconque des revendications précédentes,
**caractérisé en ce qu'**
au niveau de la patte (24) le moyen de traction (20) ne dépasse pas d'un plan du profil, passant par l'arête du flanc latéral (28) à l'opposé de la base (26) et s'étendant parallèlement à la base (26).
